(19) **Europäisches Patentamt / European Patent Office / Office européen des brevets**

(11) **EP 4 471 688 A1**

(12) **EUROPEAN PATENT APPLICATION**

(43) Date of publication:
04.12.2024 Bulletin 2024/49

(21) Application number: 23175971.3

(22) Date of filing: 30.05.2023

(51) International Patent Classification (IPC):
**G06Q 10/0631** (2023.01)

(52) Cooperative Patent Classification (CPC):
**G06Q 10/06311**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Beyer, Dagmar**
**80339 München (DE)**
• **Hildebrandt, Marcel**
**80634 München (DE)**
• **Li, Hang**
**81549 München (DE)**
• **Liu, Yushan**
**81737 München (DE)**

(74) Representative: **Siemens Patent Attorneys**
**Postfach 22 16 34**
**80506 München (DE)**

(54) **METHOD AND SYSTEM FOR LOGISTICS ROUTE PLANNING**

(57) A graph database stores a knowledge graph having nodes and directed edges representing a current status of a logistics network, wherein the nodes include entity nodes (EN) each representing an entity in the logistics network, and incident nodes (IN) each representing an incident, and wherein the directed edges include delivery edges (DE) and impact edges (IE). For determining an optimal path between a sender and a receiver a graph neural network model provides node and edge embeddings. Neural networks receive the embeddings and calculate for the respective entity nodes (EN) and delivery edges (DE) a probability that they lie on an optimal path. A greedy pathfinding algorithm computes the optimal path using the calculated probabilities.

This approach takes the impact of real-time incidents into account and serves as a decision support for production planners and logisticians to identify optimal and alternative paths and make better informed planning choices. It also provides scalability due to its constant computational complexity, and the computation time does not depend on the number of hops, making it applicable to large graphs. Embodiments provide flexibility as they can adapt to changes in the graph structure without retraining. They can handle new nodes/edges as well as removed nodes/edges. This is advantageous as in logistics networks, frequent changes might occur, e.g., when a new incident affects an airport so that no deliveries to the airport can be made on this day.

FIG 3

EP 4 471 688 A1

**Description**

Independent of the grammatical term usage, individuals with male, female or other gender identities are included within the term.

In logistics networks, finding optimal paths between a sender, e.g., a supplier, and a receiver, e.g., a production site, is essential for reliable planning, precise delivery time predictions, and resilient production. In case of incidents, which negatively impact the transport flow, flexible rerouting is necessary. These incidents could include short-term events like traffic jams but also events like natural disaster that could have a lasting impact on logistics infrastructure.

Production planners often rely on the delivery dates given by their suppliers, without their own validation. Logistics simulations can support them with specific predictions, but the simulation requires domain knowledge and a predefined model, which often only considers averaged values, e.g., from processing times at warehouses, but not the impact of real-time incidents.

Generally, finding the optimal (or shortest) path between the sender and the receiver has been addressed by a variety of works.

First, shortest path algorithms: A variety of existing algorithms tackle the problem of finding the shortest path between two nodes in the graph, e.g., the ones disclosed in Dijkstra, E. W.: A Note on Two Problems in Connexion with Graphs, Numerische Mathematik 1, pp. 269-271, 1959; Bang-Jensen, J., and Gutin, G.: Section 2.3.4: The Bellman-Ford-Moore Algorithm, in Digraphs: Theory, Algorithms and Applications (First ed.), pp. 55-58, 2000; and Dechter, R., and Pearl, J.: Generalized Best-First Search Strategies and the Optimality of A*, Journal of the Association for Computing Machinery, Vol. 32, No. 3, July 1985, pp. 505-536. However, these methods are based on graph traversal and exhibit high computational complexity, making them unsuitable for large graphs.

Second, domain knowledge and human intuition: Given domain knowledge, humans can identify approximate optimal paths on a map quite well, as disclosed in Bongiorno, C., et al.: Vector-based Pedestrian Navigation in Cities, Nature Computational Science 1(10), pp. 678-685, 2021. However, the drawbacks are that domain knowledge needs to be available, there is no guarantee to find the optimal path, and the high time consumption of manual path finding.

Third, logistics simulations: Supply chains and transport networks can be simulated by creating a corresponding digital twin. Such a simulator can investigate different scenarios to identify optimal or alternative paths and predict the outcomes, e.g., delivery times. However, these simulations are only as good as their underlying models and rules. If the model does not reflect the real-world situations, the results might not be meaningful.

Fourth, graph representations: Neural network methods such as the one disclosed in Osanlou, K., et al.: Constrained shortest path search with graph convolutional neural networks, arXiv preprint arXiv:2108.00978v1 [cs.AI], 2021, available on the internet at https://doi.org/10.48550/arXiv.2108.00978 on 08.05.2023, directly take the graph as input for path optimization, where the input is often in the form of an adjacency matrix. However, such approaches can only be applied to fixed graphs since any change in the graph structure requires a retraining of the model.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for logistics route planning, the following operations are performed by components, wherein the components are hardware components and/or software components executed by one or more processors:

- storing, by a graph database, a knowledge graph having nodes and directed edges representing a current status of a logistics network, wherein the nodes include

  - entity nodes each representing an entity in the logistics network, in particular a supplier, distribution center, port, airport, or production site, and
  - incident nodes each representing an incident, wherein each incident is an event that negatively impacts at least one of the entities,

  and wherein the directed edges include

  - delivery edges between the entity nodes, and
  - impact edges between each incident node and one or more entity nodes,

- receiving, by a user interface, a selection of a sender node and a receiver node among the entity nodes,
- determining at least one optimal path option between the sender node and the receiver node by

  - providing, by a graph neural network model receiving the knowledge graph as input, a node embedding for each entity node and an edge embedding for each delivery edge based on the respective node embeddings,

- calculating for each entity node, by a first neural network receiving as input the respective node embedding, a probability that the entity node lies on an optimal path,
- calculating for each delivery edge, by a second neural network receiving as input the respective edge embedding, a probability that the delivery edge lies on an optimal path,
- computing the at least one optimal path option between the sender node and the receiver node using the calculated probabilities,

- outputting, by the user interface, the at least one optimal path option.

The system for logistics route planning comprises the following components:

- a graph database, configured for storing a knowledge graph having nodes and directed edges representing a current status of a logistics network, wherein the nodes include

  - entity nodes each representing an entity in the logistics network, in particular a supplier, distribution center, port, airport, or production site, and
  - incident nodes each representing an incident, wherein each incident is an event that negatively impacts at least one of the entities,

  and wherein the directed edges include

  - delivery edges between the entity nodes, and
  - impact edges between each incident node and one or more entity nodes,

- a user interface, configured for

  - receiving a selection of a sender node and a receiver node among the entity nodes, and
  - outputting at least one optimal path option,

- the following components, wherein the components are hardware components and/or software components executed by one or more processors, and wherein the components are configured for determining the at least one optimal path option between the sender node and the receiver node:

  - a graph neural network model, configured for receiving the knowledge graph as input and for providing a node embedding for each entity node and an edge embedding for each delivery edge based on the respective node embeddings,
  - a first neural network, configured for receiving as input each node embedding and for calculating for the respective entity node a probability that the entity node lies on an optimal path,
  - a second neural network, configured for receiving as input each edge embedding and for calculating for the respective delivery edge a probability that the delivery edge lies on an optimal path,
  - a component, configured for computing the at least one optimal path option between the sender node and the receiver node using the calculated probabilities.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, provide a graph neural network-based approach that learns node and edge embeddings while taking the impact of real-time incidents into account. The probability for each node and edge of lying on the optimal path is obtained based on the learned embeddings. The method and system, or at least some of their embodiments, can serve as a decision support for production planners and logisticians to identify optimal and alternative paths and make better informed planning choices.

The method and system, or at least some of their embodiments, provide scalability since they have constant computational complexity, and the computation time does not depend on the number of hops. In contrast to many shortest path algorithms and manual path finding, they are applicable to large graphs.

The method and system, or at least some of their embodiments, provide usability by non-experts, as no domain knowledge is needed to use them to find an optimal path in an automated manner. Unlike logistics simulations, they do not require the definition of a model beforehand that should reflect real-world situations.

An embodiment of the method comprises the additional step of adapting, before determining the at least one optimal path option, the knowledge graph due to a current change in the logistics network by removing and/or adding entity nodes and/or delivery edges, and/or removing and/or adding incident nodes and/or impact edges.

This embodiment, provides flexibility as it can adapt to changes in the graph structure without retraining. The graph neural network model can handle new nodes/edges as well as removed nodes/edges. This is advantageous as in logistics networks, frequent changes might occur, e.g., when a new incident affects an airport so that no deliveries to the airport can be made on this day.

In an embodiment of the method, the knowledge graph is adapted in real time to reflect a dynamically changing status of the logistics network.

According to this embodiment, the model can even give predictions in real-time. Since the knowledge graph is updated in real-time to reflect the dynamically changing status of the logistics network, the model can be used to provide changing optimal path options in real time as well.

In another embodiment of the method, a greedy pathfinding algorithm computes the at least one optimal path option between the sender node and the receiver node.

In a further embodiment of the method, the greedy pathfinding algorithm initializes each optimal path option with the sender node and greedily appends delivery edges and entity nodes with the highest probability to the optimal path option until the receiver node is reached.

In another embodiment of the method, the first neural network and the second neural network are multilayer perceptrons.

In an embodiment of the method, the graph neural network model is structured to receive an initialization of each node embedding, wherein in particular each node embedding is initialized with a one-hot encoded vector stating if the node represents the sender node, the receiver node, or another node, and to iteratively apply each layer of the graph neural network model to the node embedding.

In another embodiment of the method, the graph neural network model is structured to obtain the node embedding when applying each layer of the graph neural network model by

$$z_i^{(l)} = \sigma_1\left(\sum_{j \in N(i) \cup \{i\}} \alpha_{ij}^{(l)} W^{(l)} M(z_j^{(l-1)}; t_j)\right) \in \mathbb{R}^{d_l},$$

wherein

- i identifies the node,
- $z_i$ denotes the node embedding,
- l identifies the layer,
- t denotes the node type,
- N(i) denotes the neighbors of the node,
- $\alpha_{ij}^{(l)}$ is scalar value,
- $W^{(l)} \in \mathbb{R}^{d_l \times d_{l-1}}$ is a trainable parameter,
- $\sigma_1$ is a non-linear activation function, and
- $M(\cdot; t_j)$ is a multilayer perceptron that depends on the node type.

This embodiment allows to add new logistics and incident nodes to the knowledge graph without the need of retraining the graph neural network model. As a result, the graph neural network model can flexibly adapt to structural changes in the logistics network and/or to new incidents.

In an embodiment of the method, each directed edge is weighted with a weight, and the scalar value depends on the weights and is calculated as follows:

$$\alpha_{ij}^{(l)} = \frac{\exp\left(a^T \sigma_2\left(\left[W^{(l-1)}z_i^{(l-1)} \,\|\, W^{(l-1)}z_j^{(l-1)} \,\|\, w_e w_{ij}\right]\right)\right)}{\sum_{j' \in N(i) \cup \{i\}} \exp\left(a^T \sigma_2\left(\left[W^{(l-1)}z_i^{(l-1)} \,\|\, W^{(l-1)}z_{j'}^{(l-1)} \,\|\, w_e w_{ij'}\right]\right)\right)} \quad ,$$

wherein

- $w_{ij}$ denotes the weight,
- $a \in \mathbb{R}^{3d_{l-1}}$ and $w_e \in \mathbb{R}^{d_{l-1}}$ are trainable parameters, and
- $\sigma_2$ is a non-linear activation function.

In another embodiment of the method, the weights of delivery edges represent a key performance indicator, in particular a delivery time, costs, emissions, a reliability, or any aggregation of these values, and the weights of impact edges represent an impact level.

The computer program product with program instructions for carrying out a method according to one of the method claims.

The provision device for the computer program product according to the preceding claim, wherein the provision device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows a subgraph SG representing a part of a logistics network,

Fig. 4    shows a flowchart of a possible exemplary embodiment of a method for logistics route planning.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

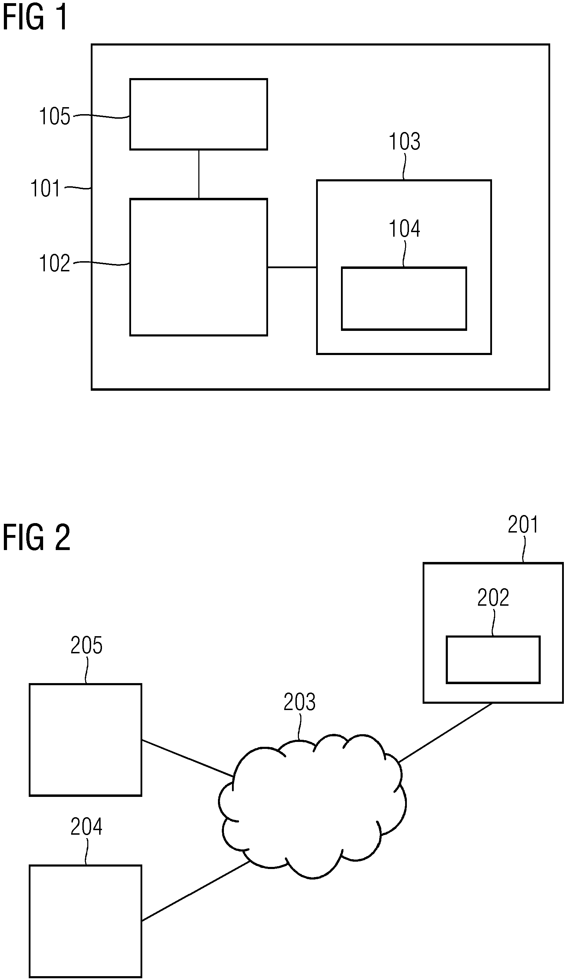

Fig. 1 shows one sample structure for computer-implementation of the invention which comprises:

(101)    computer system
(102)    processor
(103)    memory
(104)    computer program (product)
(105)    user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102.

Results of invention may be presented on the user interface 105. Alternatively, they may be stored in the memory 103 or on another suitable means for storing data.

Fig. 2 shows another sample structure for computer-implementation of the invention which comprises:

(201)    provisioning device
(202)    computer program (product)
(203)    computer network / Internet
(204)    computer system
(205)    mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

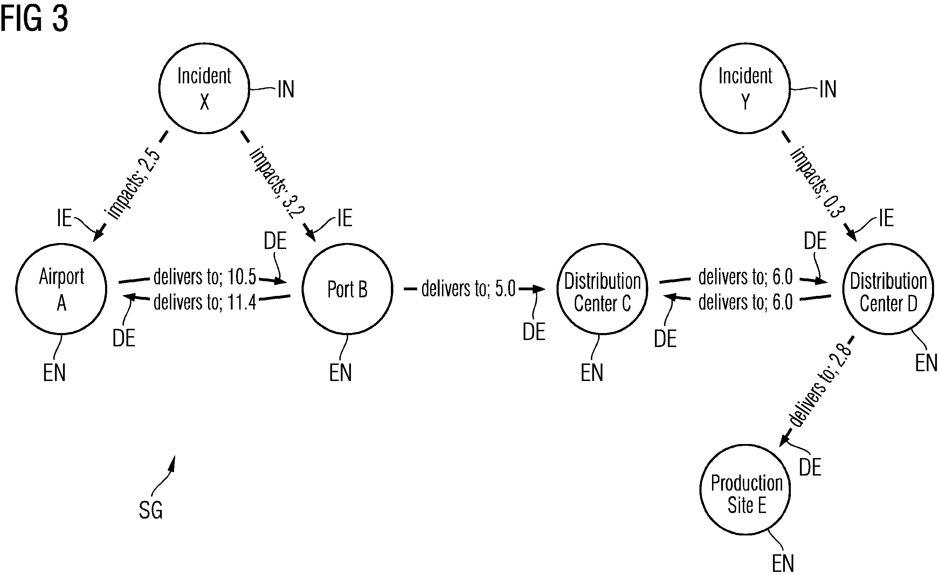

Preferably, the embodiments shown in Figs. 3 to 4 can be implemented with a structure as shown in Fig. 1 or Fig. 2.

The following embodiments describe a graph neural network based approach that learns node and edge embeddings for a knowledge graph while taking the impact of real-time incidents into account. The probability for each node and edge of lying on an optimal path is obtained based on the learned embeddings. As a result, the following embodiments can serve as a decision support system for production planners and logisticians to identify optimal and alternative logistics paths and make better informed planning choices.

The following embodiments provide an approach for finding an optimal route between a sender, e.g., a supplier, and a receiver, e.g., a production site, that takes the influence of current incidents into account. Note that the following embodiments assume infinite resources along the logistics paths.

Knowledge graph definition

Let $G = (V, E, T_V, T_E)$ be a knowledge graph, where $V$ represents the set of nodes, $E$ the set of edges, $T_V$ the set of node types, and $T_E$ the set of edge types.

The node types in $T_V$ include entities in logistics networks, such as suppliers, distribution centers, ports, airports, and production sites, as well as incidents (events that negatively impact entities in the logistics network).

The edge types in $T_E$ include "delivers to", which connects entities in the logistics network, and "impacts", which connects an incident with one or several entities in the logistics network.

An edge is described by a tuple $(i, j, t_e, w)$, where the directed edge between $i \in V$ and $j \in V$ is of type $t_e \in T_E$. The edge $(i, j, t_e, w)$ has a weight $w \in \mathbb{R}_{\geq 0}$, which can be interpreted as the impact level for $t_e$ = "impacts". For $t_e$ = "delivers to", the weight can represent a KPI such as the delivery time, costs, emissions, reliability, or any aggregation of values of interest. It is possible that there exist several edges with different weights between two nodes, e.g., when there are several possible delivery paths.

Fig. 3 shows an exemplary subgraph SG of the knowledge graph $G$. The subgraph contains entity nodes EN representing the entities in the logistics network, incident nodes IN representing incidents in the logistics network, delivery edges DE between the entity nodes EN, and impact edges between each incident node IN and one or more entity nodes EN. The delivery edges DE are of edge type "delivers to" and the impact edges are of edge type "impacts", as mentioned above. Fig. 3 also shows examples for the weights discussed above.

Node embeddings

Given the knowledge graph **G**, the current embodiment uses a graph neural network model with **L** layers to learn embeddings for all nodes.

The embedding of node **i** is initialized with $z_i^{(0)} \in \{0,1\}^3$, a one-hot encoded vector stating if the node represents the sender (sender node), the receiver (receiver node), or other. Then, the embedding of node **i** when applying layer **l** is obtained by

$$z_i^{(l)} = \sigma_1\left(\sum_{j \in N(i) \cup \{i\}} \alpha_{ij}^{(l)} W^{(l)} M(z_j^{(l-1)}; t_j)\right) \in \mathbb{R}^{d_l},$$

where $N(i)$ denotes the neighbors of node $i$, $W^{(l)} \in \mathbb{R}^{d_l \times d_{l-1}}$ is a trainable parameter of the model, and $\sigma_1$ is a non-linear activation function.

$M(\cdot; t_j)$ is a multilayer perceptron that depends on the node type $t_j \in T_V$, i.e., all logistics nodes share the same parameters and all incident nodes share the same parameters. Due to this construction, new logistics and incident nodes can be added to the graph without the need of retraining the whole model, and the model can flexibly adapt to structural changes in the logistics network or new incidents.

The scalar value $\alpha_{ij}^{(l)}$ depends on the edge weight $w_{ij}$ and is calculated as follows:

$$\alpha_{ij}^{(l)} = \frac{\exp\left(a^T \sigma_2\left(\left[W^{(l-1)}z_i^{(l-1)} \| W^{(l-1)}z_j^{(l-1)} \| w_e w_{ij}\right]\right)\right)}{\sum_{j' \in N(i) \cup \{i\}} \exp\left(a^T \sigma_2\left(\left[W^{(l-1)}z_i^{(l-1)} \| W^{(l-1)}z_{j'}^{(l-1)} \| w_e w_{ij'}\right]\right)\right)} ,$$

where $a \in \mathbb{R}^{3d_{l-1}}$ and $w_e \in \mathbb{R}^{d_{l-1}}$ are trainable parameters, and $\sigma_2$ is a non-linear activation function.

After applying all graph neural network layers, the final node embedding of node $i$ is given by $z_i^{(L)}$.

Edge embeddings

Since the current embodiment is interested in the optimal delivery path and wants to know which edges between logistics entities belong to it, it defines for each edge (*i,j,'delivers to',w*) its entity embedding as

$$e_{ij} = z_i^{(L)} + z_j^{(L)}.$$

Optimal path probabilities

For a logistics node *i,* the probability that *i* is part of the optimal path is given by a first multilayer perceptron $f_v: \mathbb{R}^{d_L} \to [0,1], \ z^{(L)} \mapsto f_v(z^{(L)})$.

Similarly, for an edge (*i,j,'delivers to',w*), the probability that (*i,j,'delivers to',w*) lies on the optimal path is given by a second multilayer perceptron $f_e: \mathbb{R}^{d_L} \to [0,1]$, $e_{ij} \mapsto f_e(e_{ij})$.

The optimal path options can be derived regarding the nodes and edges with the highest probabilities, e.g., by greedy pathfinding.

Model Training

In this section, the term model refers both to the graph neural network model as well as to the first multilayer perceptron $f_v$ and to the second multilayer perceptron $f_e$, as they are trained in tandem to produce useful embeddings and probabilities, respectively.

The weights of the model are trained using gradient descent algorithms to minimize the difference between the predictions and precomputed training labels. The training labels can be obtained using analytic methods, for example greedy search. After the model is trained, the training labels are no longer necessary.

The entire knowledge graph containing all available knowledge about existing logistics networks forms the training dataset. During training, a subgraph is randomly sampled from the training dataset, and a sender node as well as a receiver node are selected from nodes of the subgraph. Node embeddings are initialized based on the problem's configuration. In other words, for each subgraph sampled from the knowledge graph, the embedding of each node is initialized with a one-hot encoded vector stating if the node is the sender node, the receiver node, or other.

The model then performs a forward pass, predicting the probabilities of each node and edge of the subgraph being on an optimal path, which are compared with the precomputed training labels to obtain a loss that guides the optimization of the parameters of the model.

When constructing the training dataset, nodes and edges are randomly added or removed to simulate the emergence or end of incidents in logistics networks. The subgraphs generated have varying numbers of nodes and edges, representing the real-world complexity of logistics networks. Moreover, different path lengths between the sender node and the receiver node are sampled to ensure that the model can generalize to a wide range of scenarios.

In other words, training aims at covering as many variations as possible by preparing subgraphs with different levels of information. For different subgraph configurations, there could be different optimal paths. The model is trained to be robust to input configurations.

Deployment

During deployment, the entire knowledge graph is fed into the graph neural network model to make accurate predictions. The trained graph neural network model can be used to produce node and edge embeddings. Subsequently, it is left to perform forwarded passes through the first multilayer perceptron $f_v$ and the second multilayer perceptron $f_e$ to obtain the node and edge probabilities. Starting from the source node, a candidate for the optimal path can then be constructed by greedily appending the nodes and edges with the highest probability to the path until the target node is reached.

In case of dynamic changes to the logistics network (e.g., edges in the knowledge graph need to be removed due to faults in the transportation system), the prediction is performed based on an updated topology of the knowledge graph. In other words, the knowledge graph is adapted by removing and/or adding entity nodes and/or delivery edges, and/or by removing and/or adding incident nodes and/or impact edges. The updated knowledge graph is then fed into the graph neural network model for the next prediction.

Entity nodes and incident nodes can be added to the knowledge graph as long as they share the same node types as the entity nodes and incident nodes encountered by the graph neural network model during training. There is no need to retrain model parameters since the graph neural network model already has embeddings for such types of nodes.

The model can even give predictions in real-time. If the knowledge graph is updated in real time to reflect the dynamically changing status of the logistics network, then the model can be used to provide changing optimal path options in real time.

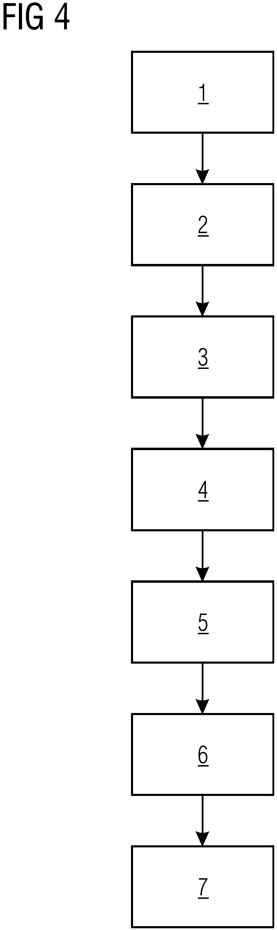

Fig. 4 shows a flowchart of a possible exemplary embodiment of a method for logistics route planning.

In a first step 1, a graph database stores a knowledge graph having nodes and directed edges representing a current status of a logistics network. The knowledge graph has been discussed in detail above, with a subgraph of the knowledge graph being depicted in Fig. 3.

In a second step 2, a user interface receives a selection of a sender node and a receiver node among the entity nodes.

Determining at least one optimal path option between the sender node and the receiver node begins with a third step 3, wherein a graph neural network model receives the knowledge graph as input and provides a node embedding for each entity node and an edge embedding for each delivery edge based on the respective node embeddings.

In a fourth step 4, a first neural network receives as input each node embedding and calculates for the respective entity node a probability that the entity node lies on an optimal path.

In a fifth step 5, a second neural network receives as input the respective edge embedding and calculates for each delivery edge a probability that the delivery edge lies on an optimal path.

A sixth step 6 consists of computing the at least one optimal path option between the sender node and the receiver node using the calculated probabilities.

In a seventh step 7, the user interface outputs the at least one optimal path option.

With a suitable software and/or hardware architecture, some of these steps can be performed simultaneously. For example, the first neural network and the second neural network can operate in parallel.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for logistics route planning, wherein the following operations are performed by components, and wherein the components are hardware components and/or software components executed by one or more processors:

   - storing (1), by a graph database, a knowledge graph having nodes and directed edges representing a current status of a logistics network, wherein the nodes include

      - entity nodes (EN) each representing an entity in the logistics network, in particular a supplier, distribution center, port, airport, or production site, and
      - incident nodes (IN) each representing an incident, wherein each incident is an event that negatively impacts at least one of the entities,

   and wherein the directed edges include

      - delivery edges (DE) between the entity nodes (EN), and
      - impact edges (IE) between each incident node (IN) and one or more entity nodes (EN),

   - receiving (2), by a user interface, a selection of a sender node and a receiver node among the entity nodes (EN),
   - determining at least one optimal path option between the sender node and the receiver node by

      - providing (3), by a graph neural network model receiving the knowledge graph as input, a node embedding for each entity node (EN) and an edge embedding for each delivery edge (DE) based on the respective node embeddings,
      - calculating (4) for each entity node (EN), by a first neural network receiving as input the respective node embedding, a probability that the entity node (EN) lies on an optimal path,
      - calculating (5) for each delivery edge (DE), by a second neural network receiving as input the respective edge embedding, a probability that the delivery edge (DE) lies on an optimal path,
      - computing (6) the at least one optimal path option between the sender node and the receiver node using the calculated probabilities,

   - outputting (7), by the user interface, the at least one optimal path option.

2. The method of claim 1, wherein before determining the at least one optimal path option,

   - the knowledge graph is adapted due to a current change in the logistics network by

      - removing and/or adding entity nodes (EN) and/or delivery edges (DE), and/or
      - removing and/or adding incident nodes (IN) and/or impact edges (IE).

3. The method of claim 2,

   - wherein the knowledge graph is adapted in real time to reflect a dynamically changing status of the logistics network.

4. The method according to any of the preceding claims,

   - wherein a greedy pathfinding algorithm computes the at least one optimal path option between the sender node and the receiver node.

5. The method of claim 4,

- wherein the greedy pathfinding algorithm initializes each optimal path option with the sender node and greedily appends delivery edges (DE) and entity nodes (EN) with the highest probability to the optimal path option until the receiver node is reached.

6. The method according to any of the preceding claims,

   - wherein the first neural network and the second neural network are multilayer perceptrons.

7. The method according to any of the preceding claims,

   - wherein the graph neural network model is structured to

      - receive an initialization of each node embedding, wherein in particular each node embedding is initialized with a one-hot encoded vector stating if the node represents the sender node, the receiver node, or another node, and
      - iteratively apply each layer of the graph neural network model to the node embedding.

8. The method of claim 7,

   - wherein the graph neural network model is structured to obtain the node embedding when applying each layer of the graph neural network model by

$$z_i^{(l)} = \sigma_1\left(\sum_{j \in N(i) \cup \{i\}} \alpha_{ij}^{(l)} W^{(l)} M(z_j^{(l-1)}; t_j)\right) \in \mathbb{R}^{d_l},$$

   wherein

      - $i$ identifies the node,
      - $z_i$ denotes the node embedding,
      - $l$ identifies the layer,
      - $t$ denotes the node type,
      - $N(i)$ denotes the neighbors of the node,
      - $\alpha_{ij}^{(l)}$ is scalar value,
      - $W^{(l)} \in \mathbb{R}^{d_l \times d_{l-1}}$ is a trainable parameter,
      - $\sigma_1$ is a non-linear activation function, and
      - $M(\cdot; t_j)$ is a multilayer perceptron that depends on the node type.

9. The method of claim 8,

   - wherein each directed edge is weighted with a weight, and
   - wherein the scalar value depends on the weights and is calculated as follows:

$$\alpha_{ij}^{(l)} = \frac{\exp\left(a^T \sigma_2\left(\left[W^{(l-1)} z_i^{(l-1)} \| W^{(l-1)} z_j^{(l-1)} \| w_e w_{ij}\right]\right)\right)}{\sum_{j' \in N(i) \cup \{i\}} \exp\left(a^T \sigma_2\left(\left[W^{(l-1)} z_i^{(l-1)} \| W^{(l-1)} z_{j'}^{(l-1)} \| w_e w_{ij'}\right]\right)\right)},$$

   wherein

      - $w_{ij}$ denotes the weight,
      - $a \in \mathbb{R}^{3d_{l-1}}$ and $W_e \in \mathbb{R}^{d_{l-1}}$ are trainable parameters, and
      - $\sigma_2$ is a non-linear activation function.

10. The method of claim 9, wherein

- the weights of delivery edges (DE) represent a key performance indicator, in particular a delivery time, costs, emissions, a reliability, or any aggregation of these values, and
- the weights of impact edges (IE) represent an impact level.

**11.** A system for logistics route planning, comprising:

- a graph database, configured for storing (1) a knowledge graph having nodes and directed edges representing a current status of a logistics network, wherein the nodes include

- entity nodes (EN) each representing an entity in the logistics network, in particular a supplier, distribution center, port, airport, or production site, and
- incident nodes (IN) each representing an incident, wherein each incident is an event that negatively impacts at least one of the entities,

and wherein the directed edges include

- delivery edges (DE) between the entity nodes (EN), and
- impact edges (IE) between each incident node (IN) and one or more entity nodes (EN),

- a user interface, configured for

- receiving (2) a selection of a sender node and a receiver node among the entity nodes (EN), and
- outputting (7) at least one optimal path option,

- the following components, wherein the components are hardware components and/or software components executed by one or more processors, and wherein the components are configured for determining the at least one optimal path option between the sender node and the receiver node:

- a graph neural network model, configured for receiving the knowledge graph as input and for providing (3) a node embedding for each entity node (EN) and an edge embedding for each delivery edge (DE) based on the respective node embeddings,
- a first neural network, configured for receiving as input each node embedding and for calculating (4) for the respective entity node (EN) a probability that the entity node (EN) lies on an optimal path,
- a second neural network, configured for receiving as input each edge embedding and for calculating (5) for the respective delivery edge (DE) a probability that the delivery edge (DE) lies on an optimal path,
- a component, configured for computing (6) the at least one optimal path option between the sender node and the receiver node using the calculated probabilities.

**12.** Computer program product with program instructions for carrying out a method according to one of the method claims.

**13.** Provision device for the computer program product according to the preceding claim, wherein the provision device stores and/or provides the computer program product.

FIG 1

FIG 2

FIG 3

FIG 4

Europäisches
Patentamt

European
Patent Office

Office européen
des brevets

# EUROPEAN SEARCH REPORT

Application Number

EP 23 17 5971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/078448 A1 (CELLA CHARLES HOWARD [US] ET AL) 16 March 2023 (2023-03-16) * paragraph [0312] – paragraph [3059]; claim 1; figures 1-158 * | 1-13 | INV. G06Q10/0631 |
| Y | US 2022/027707 A1 (WU LINGFEI [US] ET AL) 27 January 2022 (2022-01-27) * paragraph [0001] – paragraph [0086]; claim 1; figures 1-5 * | 1-13 | |

TECHNICAL FIELDS
SEARCHED       (IPC)

G06Q
G06F
G06N

The present search report has been drawn up for all claims

| Place of search | Date of completion of the search | Examiner |
|---|---|---|
| Munich | 13 November 2023 | Viets, Ana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................

& : member of the same patent family, corresponding
    document

EPO FORM 1503 03.82 (P04C01)

EP 4 471 688 A1

## ANNEX TO THE EUROPEAN SEARCH REPORT
## ON EUROPEAN PATENT APPLICATION NO.

EP 23 17 5971

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2023

| Patent document cited in search report | Publication date | Patent family member(s) | Publication date |
|---|---|---|---|
| US 2023078448 A1 | 16-03-2023 | NONE | |
| US 2022027707 A1 | 27-01-2022 | NONE | |

EPO FORM P0459

For more details about this annex : see Official Journal of the European Patent Office, No. 12/82

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIJKSTRA, E. W.** A Note on Two Problems in Connexion with Graphs. *Numerische Mathematik*, 1959, vol. 1, 269-271
- The Bellman-Ford-Moore Algorithm. **BANG-JENSEN, J.** ; **GUTIN, G.** Digraphs: Theory, Algorithms and Applications. 2000, 55-58
- **DECHTER, R.** ; **PEARL, J.** Generalized Best-First Search Strategies and the Optimality of A. *Journal of the Association for Computing Machinery*, July 1985, vol. 32 (3), 505-536
- **BONGIORNO, C. et al.** Vector-based Pedestrian Navigation in Cities. *Nature Computational Science*, 2021, vol. 1 (10), 678-685
- **OSANLOU, K. et al.** Constrained shortest path search with graph convolutional neural networks. *arXiv:2108.00978v1*, 2021, https://doi.org/10.48550/arXiv.2108.00978